# EUROPÄISCHE PATENTSCHRIFT

(11) **EP 4 072 777 B1**
(45) Veröffentlichungstag und Bekanntmachung des Hinweises auf die Patenterteilung: **27.09.2023**
(21) Anmeldenummer: 20810862.1
(22) Anmeldetag: 05.11.2020
(51) Int. Cl.: B24B 41/00, B24B 55/04

(54) **ANTRIEBSVORRICHTUNG FÜR EINE SCHUTZHAUBE UND VERFAHREN ZUM VERSTELLEN EINER SCHUTZHAUBE**
DRIVE DEVICE FOR A PROTECTIVE HOOD AND METHOD FOR ADJUSTING A PROTECTIVE HOOD
DISPOSITIF D'ENTRAÎNEMENT POUR UN CAPOT DE PROTECTION ET PROCÉDÉ D'AJUSTEMENT DE CAPOT DE PROTECTION

(30) Priorität: 11.12.2019 DE 102019133892
(43) Veröffentlichungstag der Anmeldung: 19.10.2022
(73) Patentinhaber: Schaeffler Technologies AG & Co. KG, 91074 Herzogenaurach (DE)
(72) Erfinder: JANSSEN, Julius, 90443 Nürnberg (DE); SATTLER, Klaus, 91456 Diespeck (DE); HOFMANN, Jan, 90459 Nürnberg (DE)
(86) Internationale Anmeldenummer: PCT/DE2020/100947
(87) Internationale Veröffentlichungsnummer: WO 2021/115525

(56) Entgegenhaltungen:
- EP-A1- 3 106 738
- EP-A2- 2 682 229
- CN-B- 104 117 895

## Beschreibung

Die Erfindung betrifft eine Antriebsvorrichtung für eine Schutzhaube einer Maschine. Ferner betrifft die Erfindung ein Verfahren zum motorischen Verstellen einer durch ein Gegengewicht teilweise entlasteten Schutzhaube einer Maschine.

Werkzeugmaschinen mit Schutzhauben sind zum Beispiel in den Dokumenten EP 2 682 229 A2 und DE 71 336 03 U beschrieben. Im letztgenannten Fall ist eine Schutzhaube zusätzlich zu einer rohrförmigen Schutzhülse vorgesehen.

Die DE 92 08 537 U1 beschreibt eine Presse mit einem gegen ein Werkstück verfahrbaren Presskolben, wobei parallel zur Laufrichtung des Presskolbens eine Schutzhaube verschiebbar ist.

Eine in der US 2,593,596 A beschriebene Kreissäge umfasst einen Haubenkörper, welcher durch Federspannung oder Gewichtsausgleich belastet ist und in beliebiger Höhe über einem Maschinentisch stehen bleiben soll.

Verschiedene Vorrichtungen zur Bewegung und Arretierung einer Schutztür, welche vor einer zu sichernden Arbeitsstelle angeordnet ist, sind in den Dokumenten EP 3 106 738 A1 und EP 3 343 085 A1 offenbart.

Weitere Verriegelungsmechanismen für Türen sind in den Dokumenten DE 20 2018 003 076 U1, DE 20 2016 006 763 U1 und DE 20 2014 101 967 U1 beschrieben.

Ein Antrieb mit Gewichtsausgleich für vertikal fahrende Türen ist zum Beispiel aus der DE 20 2016 002 514 U1 bekannt. Hierbei ist ein Zugelement, welches über eine Umlenkrolle geführt ist, einerseits mit einem beweglichen Türblatt und andererseits mit einem Gegengewicht verbunden.

Die CN 104 117 895 B, welche die Basis für den Anspruch 1 bildet, beschreibt eine Antriebsvorrichtung für eine Schutzhaube einer Maschine mit einer rotierenden Schleifscheibe, wobei die Antriebseinrichtung hier über Anschläge gesteuert wird, und die Schutzhaube federelastisch gelagert ist.

Der Erfindung liegt die Aufgabe zugrunde, den Antrieb von Schutzhauben, welche an Maschinen angeordnet sind, gegenüber dem genannten Stand der Technik sowohl unter sicherheitstechnischen als auch unter fertigungstechnischen Gesichtspunkten weiterzuentwickeln.

Diese Aufgabe wird erfindungsgemäß gelöst durch eine Antriebsvorrichtung mit den Merkmalen des Anspruchs 1. Ebenso wird die Aufgabe gelöst durch ein Verfahren zum motorischen Verstellen einer Schutzhaube einer Maschine gemäß Anspruch 9. Im Folgenden im Zusammenhang mit dem Verstellverfahren erläuterte Ausgestaltungen und Vorteile der Erfindung gelten sinngemäß auch für die Antriebsvorrichtung und umgekehrt.

Die Antriebsvorrichtung dient dem Heben und Senken einer Schutzhaube einer Maschine und umfasst einen Motor, welcher über einen Freilauf mit einem Zugmittel zusammenwirkt, welches einerseits zur Belastung durch die Gewichtskraft der Schutzhaube und andererseits zur Belastung durch ein Gegengewicht vorgesehen ist, wobei der Freilauf derart ausgebildet ist, dass er durch eine positive Gewichtskraftdifferenz zwischen der Schutzhaube und dem Gegengewicht gesperrt ist.

Im ungestörten Betrieb wird durch die Masse der Schutzhaube eine Kraft in das Zugmittel eingeleitet, welche der durch das Gegengewicht ausgeübten Kraft entgegengerichtet ist. Die Antriebsvorrichtung hat beim Bewegen der Schutzhaube die Differenzkraft zuzüglich sämtlicher vorhandener Reibungskräfte zu überwinden. Dies gilt entsprechend auch in Fällen, in denen die Gewichtskraft der Schutzhaube und/oder die Gewichtskraft des Gegengewichtes über einen Übersetzungsmechanismus auf das Zugmittel wirkt.

Beim Absenken der Schutzhaube wird diese durch ihr eigenes Gewicht nach unten gezogen. Der Motor der Antriebsvorrichtung wirkt hierbei als Bremse. Gerät die Schutzhaube an ein Hindernis, womit sie gestoppt wird, so öffnet, falls der Motor weiter läuft, der Freilauf. Dies bedeutet, dass in diesem Zustand der Motor vom Zugmittel entkoppelt wird. Die Einleitung eines Antriebsmomentes oder einer Kraft vom Motor in das Zugmittel wird damit verhindert.

Allgemein zeichnet sich das Verfahren zum motorischen Verstellen der durch das Gegengewicht teilweise entlasteten Schutzhaube dadurch aus, dass zwischen den Motor, insbesondere Elektromotor, und die Schutzhaube ein Freilauf geschaltet ist, wobei sowohl das Anheben als auch das Absenken der Schutzhaube bei gesperrtem Freilauf erfolgt.

Nach dem Stoppen der Schutzhaube durch ein Hindernis und dem damit bewirkten automatischen Öffnen des Freilaufs kann ein erneutes Anheben der Schutzhaube bei Bedarf durch Umkehr der Antriebsrichtung des Motors erfolgen. Der Freilauf kehrt hierbei selbsttätig in seine gesperrte Stellung zurück.

Als Freilauf der Antriebsvorrichtung ist grundsätzlich ein Linearfreilauf ebenso geeignet wie ein Freilauf, der zwischen rotierenden Elementen wirkt. In beiden Fällen kann der Freilauf entweder als reibschlüssiger Freilauf, beispielsweise Klemmrollenfreilauf oder Klemmkörperfreilauf, oder als formschlüssiger Freilauf, insbesondere Klinkenfreilauf, ausgebildet sein. Wirkt der Freilauf zwischen rotierenden Elementen, so kann der Freilauf konzentrisch zu einem Umlenkrad angeordnet sein, über welches das Zugmittel, beispielsweise in Form eines offenen Zahnriemens, geführt ist.

Gemäß verschiedener Weiterbildungen ist zwischen den Motor und den Freilauf ein Untersetzungsgetriebe geschaltet. Im Fall eines linearen Antriebs kann es sich hierbei zum Beispiel um einen Spindeltrieb handeln. Ist die Freilaufwirkung dagegen zwischen rotierenden Elementen gegeben, so eignet sich insbesondere ein Umschlingungsgetriebe, beispielsweise ein Riemen- oder Kettentrieb, als Untersetzungsgetriebe. Auch ein Zahnradgetriebe ist als Untersetzungsgetriebe geeignet.

Unabhängig davon, auf welche Art der Motor Leistung in Zugmittel, welches die Schutzhaube mit dem Gegengewicht koppelt, einspeist, ist dieses Zugmittel als offenes Zugmittel gestaltet. An Stelle eines Zahnriemens kann es sich beispielsweise auch um eine Kette handeln.

Optional ist eine Alarmierungseinrichtung vorgesehen, die auslöst, sobald die Schutzhaube gegen ein Hindernis fährt. Eine solche Alarmierungseinrichtung kann in die Schutzhaube integriert oder an die Schutzhaube angebaut sein. Ebenso ist es möglich, die Alarmierungseinrichtung in die Antriebsvorrichtung zu integrieren. In diesem Fall detektiert die Alarmierungsvorrichtung ein Öffnen des Freilaufs.

Nachfolgend werden zwei Ausführungsbeispiele der Erfindung anhand einer Zeichnung näher erläutert. Hierin zeigen:
- Fig. 1: ein erstes Ausführungsbeispiel einer Antriebsvorrichtung für eine Schutzhaube einer Maschine in perspektivischer Darstellung,
- Fig. 2: in schematisierter Darstellung ein zweites Ausführungsbeispiel einer Antriebsvorrichtung für eine Schutzhaube.

Die folgenden Erläuterungen beziehen sich, soweit nicht anders angegeben, auf beide Ausführungsbeispiele. Einander entsprechende oder prinzipiell gleichwirkende Teile sind in beiden Figuren mit den gleichen Bezugszeichen gekennzeichnet.

Eine Maschine 1, durch welche ein Handarbeitsplatz bereitgestellt wird, umfasst eine Schutzhaube 2 zum Schutz des Bedienpersonals der Maschine 1. Ein Maschinengestell der Maschine 1 ist mit 4 bezeichnet. Die Schutzhaube 2 ist mittels einer Antriebsvorrichtung 3 motorisch verstellbar.

Die Antriebsvorrichtung 3 umfasst einen Elektromotor als Motor 5, welcher über ein Getriebe 6, welches als Untersetzungsgetriebe ausgelegt ist, mit einem Freilauf 7, der ebenfalls der Antriebsvorrichtung 3 zuzurechnen ist, zusammenwirkt. Ein antriebsseitiges Element des Freilaufs 7 ist mit 8, ein abtriebsseitiges Element mit 9 bezeichnet.

Der Motor 5 betätigt über das Getriebe 6 und den Freilauf 7 ein Zugmittel 14, bei welchem es sich um einen offenen Zahnriemen handelt. Der Zahnriemen 14 ist an seinem einen Ende durch die Gewichtskraft der Schutzhaube 2 und an seinem anderen Ende durch ein Gegengewicht 15 belastet. Die Belastung durch die Schutzhaube 2 ist größer als die Belastung durch das Gegengewicht 15, so dass die Schutzhaube 2 ohne weitere Kräfte in ihre geschlossene Stellung übergehen, das heißt sich senken würde. Die resultierende, auf die Schutzhaube 2 wirkende Kraft ist hierbei geringer als die halbe Gewichtskraft der Schutzhaube 2. Dies ist gleichbedeutend damit, dass die Masse der Schutzhaube 2 durch das Gegengewicht 15 größtenteils, jedoch nicht vollständig kompensiert ist.

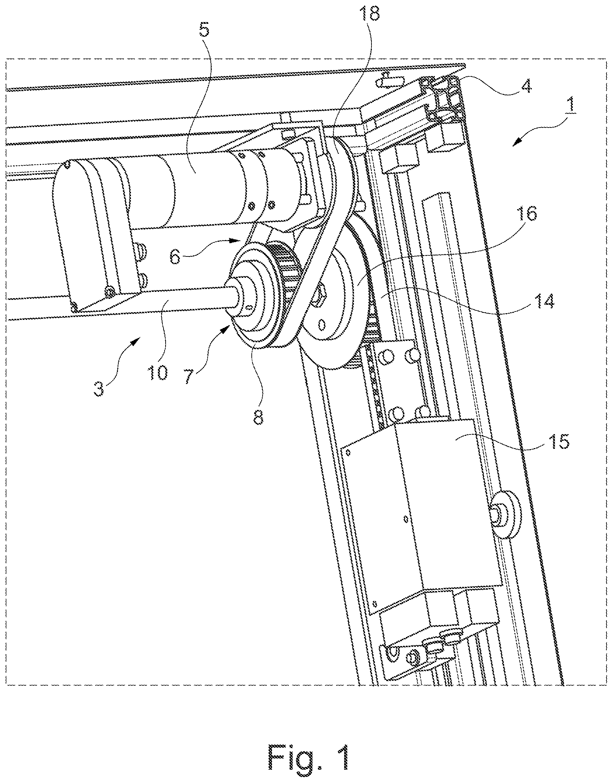

Im Ausführungsbeispiel nach Fig. 1 ist das Getriebe 6 als Umschlingungsgetriebe, nämlich Riementrieb, ausgebildet. Ein geschlossener Zahnriemen des Riementriebs 6 ist mit 18 bezeichnet. Der über den Riementrieb 6 betätigte Freilauf 7 weist antriebssowie abtriebsseitig jeweils ein rotierbares Element 8, 9 auf. Die Elemente 8, 9 des Freilaufs 7 sind konzentrisch zu einer Welle 10 angeordnet, welche im Maschinengestell 4 gelagert ist. Weiterhin ist ein Umlenkrad 16, über welches der offene Zahnriemen 14 geführt ist, konzentrisch zu den Elementen 9, 9 und damit zum gesamten Freilauf 7 angeordnet. Der Freilauf 7 ist in diesem Fall als Klemmrollenfreilauf, das heißt als reibschlüssig wirkender Freilauf, ausgebildet.

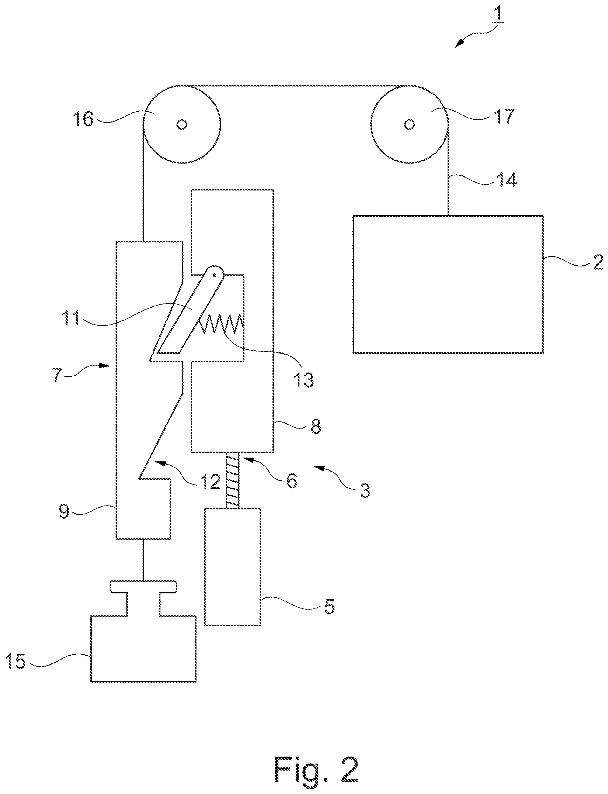

Das Ausführungsbeispiel nach Fig. 2 unterscheidet sich hinsichtlich der Gestaltung des Freilaufs 7 vom Ausführungsbeispiel nach Fig. 1: Gemäß Fig. 2 ist der Freilauf 7 als Klinkenfreilauf, das heißt formschlüssiger Freilauf, ausgebildet. Im vorliegenden Fall handelt es sich um einen linear wirkenden Freilauf 7, das heißt um einen Freilauf, bei welchem das antreibende Element 8 sowie das angetriebene Element 9 linear beweglich sind. Eine durch ein Federelement 13 belastete Sperrklinke 11 rastet beim Sperren des Freilaufs 7 in eine Sperrkontur 12 ein.

Ebenso wie im Ausführungsbeispiel nach Fig. 1 läuft im Ausführungsbeispiel nach Fig. 2 der offene Zahnriemen 14 über ein Umlenkrad 16, wobei ausschließlich in der Konstellation nach Fig. 1 ein Drehmoment in das Umlenkrad 16 einleitbar ist. In der Anordnung nach Fig. 2 ist ein zweites Umlenkrad 17, über welches das Zugmittel 14 geführt ist, erkennbar.

In beiden Ausführungsbeispielen erfolgt sowohl das Anheben als auch das Absenken der Schutzhaube 2 bei gesperrtem Freilauf 7. Dies gilt, solange die Bewegung der Schutzhaube 2 nicht, etwa durch ein im Verstellweg befindliches Hindernis, gestört ist. Trifft die Schutzhaube 2 bei deren Abwärtsbewegung auf ein Hindernis, so stellt das Hindernis eine Entlastung der Gewichtskraft der Schutzhaube 2 dar. Die positive Gewichtskraftdifferenz zwischen der Schutzhaube 2 und dem Gegengewicht 15, welche Voraussetzung für das Sperren des Freilaufs 7 ist, verschwindet somit. Beim Weiterlaufen des Motors 5 öffnet daher der Freilauf 7, wobei die auf dem Hindernis aufliegende Schutzhaube 2 dieses lediglich mit der zwischen der Schutzhaube 2 und dem Gegengewicht existierenden Gewichtskraftdifferenz belastet. Die Schutzfunktion des Freilaufs 7 ist somit rein mechanisch realisiert.

### Bezugszeichenliste

1 Maschine
2 Schutzhaube
3 Antriebsvorrichtung
4 Maschinengestell
5 Motor
6 Getriebe
7 Freilauf
8 antriebsseitiges Element des Freilaufs
9 abtriebsseitiges Element des Freilaufs
10 Welle
11 Sperrklinke
12 Sperrkontur
13 Federelement
14 Zugmittel, offener Zahnriemen
15 Gegengewicht
16 Umlenkrad
17 Umlenkrad
18 geschlossener Zahnriemen

## Patentansprüche

1. Antriebsvorrichtung für eine Schutzhaube (2) einer Maschine, mit einem Motor (5), welcher über einen Freilauf (7) mit einem Zugmittel (14) zusammenwirkt, welches einerseits zur Belastung durch die Gewichtskraft der Schutzhaube (2) und andererseits zur Belastung durch ein Gegengewicht (15) vorgesehen ist, wobei der Freilauf (7) derart ausgebildet ist, dass er durch eine positive Gewichtskraftdifferenz zwischen der Schutzhaube (2) und dem Gegengewicht (15) gesperrt ist.

2. Antriebsvorrichtung nach Anspruch 1, **dadurch gekennzeichnet, dass** der Freilauf (7) als Linearfreilauf ausgebildet ist.

3. Antriebsvorrichtung nach Anspruch 1, **dadurch gekennzeichnet, dass** der Freilauf (7) als zwischen zwei rotierbaren Elementen (8, 9) wirksamer Freilauf ausgebildet ist.

4. Antriebsvorrichtung nach Anspruch 2 oder 3, **dadurch gekennzeichnet, dass** der Freilauf (7) als reibschlüssiger Freilauf, insbesondere Klemmrollenfreilauf, ausgebildet ist.

5. Antriebsvorrichtung nach Anspruch 2 oder 3, **dadurch gekennzeichnet, dass** der Freilauf (7) als formschlüssiger Freilauf, insbesondere Klinkenfreilauf, ausgebildet ist.

6. Antriebsvorrichtung nach einem der Ansprüche 1 bis 5, **gekennzeichnet durch** ein zwischen den Motor (5) und den Freilauf (7) geschaltetes Untersetzungsgetriebe (6).

7. Antriebsvorrichtung nach einem der Ansprüche 3 bis 6, **dadurch gekennzeichnet, dass** der Freilauf (7) konzentrisch zu einem Umlenkrad (16), über welches das Zugmittel (14) geführt ist, angeordnet ist.

8. Antriebsvorrichtung nach einem der Ansprüche 1 bis 7, **dadurch gekennzeichnet, dass** als Zugmittel (14) ein offener Zahnriemen vorgesehen ist

9. Verfahren zum motorischen Verstellen einer durch ein Gegengewicht (15) teilweise entlasteten Schutzhaube (2) einer Maschine, wobei zwischen einen Motor (5) und die Schutzhaube (2) ein Freilauf (7) geschaltet ist und sowohl das Anheben als auch das Absenken der Schutzhaube (2) bei gesperrtem Freilauf (7) erfolgt.

10. Verfahren nach Anspruch 9, **dadurch gekennzeichnet, dass** der Freilauf (7) öffnet, sobald die Schutzhaube (2) beim Absenken durch ein Hindernis gestoppt wird.

## Claims

1. A drive device for a protective hood (2) of a machine, having a motor (5) which cooperates with a pulling means (14) via a freewheel (7), which is provided both for loading via the weight force of the protective hood (2) and for loading via a counter weight (15), wherein the freewheel (7) is designed in such a way that it is blocked by a positive weight force difference between the protective hood (2) and the counter weight (15).

2. The drive device according to claim 1, **characterised in that** the freewheel (7) is designed as a linear freewheel.

3. The drive device according to claim 1, **characterised in that** the freewheel (7) is designed as a freewheel effective between two rotatable elements (8, 9).

4. The drive device according to claim 2 or 3, **characterised in that** the freewheel (7) is designed as a frictionally locked freewheel, in particular a clamping roller freewheel.

5. The drive device according to claim 2 or 3, **characterised in that** the freewheel (7) is designed as a positive locking freewheel, in particular a ratcheting freewheel.

6. The drive device according to any one of claims 1 to 5, **characterised by** a reduction gear (6) connected between the motor (5) and the freewheel (7).

7. The drive device according to any one of claims 3 to 6, **characterised in that** the freewheel (7) is arranged concentrically to a deflecting wheel (16) over which the pulling means (14) is guided.

8. The drive device according to any one of claims 1 to 7, **characterised in that** an open toothed belt is provided as the pulling means (14).

9. A method for motorised adjustment of a protective hood (2) of a machine that is partially relieved by a counterweight (15), wherein a freewheel (7) is connected between a motor (5) and the protective hood (2) and both raising and lowering of the protective hood (2) are performed when the freewheel (7) is blocked.

10. The method according to claim 9, **characterised in that** the freewheel (7) opens as soon as the protective hood (2) is stopped by an obstacle during lowering.

## Revendications

1. Dispositif d'entraînement pour un capot de protection (2) d'une machine, comportant un moteur (5) qui interagit par l'intermédiaire d'une roue libre (7) avec un mécanisme de traction (14) qui sert d'une part au chargement par le poids du capot de protection (2) et d'autre part pour le chargement par un contrepoids (15), la roue libre (7) étant conçue de telle sorte qu'elle est bloquée par une différence de poids positive entre le capot de protection (2) et le contrepoids (15).

2. Dispositif d'entraînement selon la revendication 1, **caractérisé en ce que** la roue libre (7) est réalisée sous la forme d'une roue libre linéaire.

3. Dispositif d'entraînement selon la revendication 1, **caractérisé en ce que** la roue libre (7) est réalisée sous la forme d'une roue libre agissant entre deux éléments rotatifs (8, 9).

4. Dispositif d'entraînement selon la revendication 2 ou 3, **caractérisé en ce que** la roue libre (7) est réalisée sous la forme de roue libre à friction, notamment de roue libre à rouleaux.

5. Dispositif d'entraînement selon la revendication 2 ou 3, **caractérisé en ce que** la roue libre (7) est réalisée sous la forme de roue libre à emboîtement, notamment de roue libre à cliquet.

6. Dispositif d'entraînement selon l'une des revendications 1 à 5, **caractérisé par** un réducteur de vitesse (6) monté entre le moteur (5) et la roue libre (7).

7. Dispositif d'entraînement selon l'une des revendications 3 à 6, **caractérisé en ce que** la roue libre (7) est disposée concentriquement à une roue de renvoi (16) sur laquelle est guidé le mécanisme de traction (14).

8. Dispositif d'entraînement selon l'une des revendications 1 à 7, **caractérisée en ce que** le mécanisme de traction (14) est prévu sous la forme d'une courroie dentée ouverte

9. Procédé d'ajustement motorisé d'un capot de protection (2) d'une machine partiellement soulagé par un contrepoids (15), une roue libre (7) étant placée entre un moteur (5) et le capot de protection (2) et à la fois la montée et la descente du capot de protection (2) se produisant lorsque la roue libre (7) est bloquée.

10. Procédé selon la revendication 9, **caractérisé en ce que** la roue libre (7) s'ouvre dès que le capot de protection (2) est arrêté par un obstacle lors de sa descente.
